# EUROPÄISCHE PATENTANMELDUNG

(11) **EP 1 653 592 A2**
(43) Veröffentlichungstag der Anmeldung: **03.05.2006**
(21) Anmeldenummer: 05022856.8
(22) Anmeldetag: 20.10.2005
(51) Int. Cl.: H02K 9/16

(54) **Antrieb für Werkzeugmaschinen**

(30) Priorität: 29.10.2004 DE 102004053512
(71) Anmelder: Index-Werke Gmbh & Co. KG Hahn & Tessky, 73730 Esslingen (DE)
(72) Erfinder: Grossmann, Walter, 73666 Baltmannsweiler (DE); Tüllmann, Udo, Dr., 73728 Esslingen (DE)
(74) Vertreter: Hoeger, Stellrecht & Partner Patentanwälte

(57) **Zusammenfassung**

Um einen Antrieb für Werkzeugmaschinen umfassend einen um eine Rotorachse drehbaren Rotor, einen Stator mit einem Statorkörper und diesen durchsetzende Statorwicklungen und ein den Stator aufnehmendes Antriebsgehäuse mit einer mantelseitigen Kühlmedienführung, welche gasförmiges Kühlmedium entlang von mit dem Stator thermisch gekoppelten Kühlstrukturen führt, derart zu verbessern, daß eine möglichst effiziente Kühlung des Stators erfolgt, wird vorgeschlagen, daß der Statorkörper von einem Kühlmantel umschlossen ist, welcher die Kühlstrukturen trägt, daß sich der Kühlmantel in Richtung der Rotorachse mindestens über auf einer ersten Seite des Statorkörpers angeordnete Wickelköpfe der Statorwicklungen hinwegerstreckt und daß die Wickelköpfe durch Wärmeleitung mit körperlichem Kontakt thermisch mit dem Kühlmantel gekoppelt sind.

## Beschreibung

Die Erfindung betrifft einen Antrieb für Werkzeugmaschinen umfassend einen um eine Rotorachse drehbaren Rotor, einen Stator mit einem Statorkörper und diesen durchsetzende Statorwicklungen und ein den Stator aufnehmendes Antriebsgehäuse mit einer mantelseitigen Kühlmedienführung, welche gasförmiges Kühlmedium entlang von mit dem Stator thermisch gekoppelten Kühlstrukturen führt.

Derartige Antriebe für Werkzeugmaschinen sind bekannt. Bei diesen wird der Statorkörper selbst unmittelbar von dem gasförmigen Medium gekühlt, um aus diesem die Wärme abzuführen.

Eine derartige Kühlung ist jedoch hinsichtlich der Effizienz begrenzt.

Andere Lösungen sehen ein flüssiges Kühlmedium vor, welches wiederum Nachteile hinsichtlich der Führung der Flüssigkeit und eventuell auftretender Leckagen hat.

Der Erfindung liegt daher die Aufgabe zugrunde, einen Antrieb für Werkzeugmaschinen der gattungsgemäßen Art derart zu verbessern, daß eine möglichst effiziente Kühlung des Stators erfolgt.

Diese Aufgabe wird bei einem Antrieb für Werkzeugmaschinen der eingangs beschriebenen Art erfindungsgemäß dadurch gelöst, daß der Statorkörper von einem Kühlmantel umschlossen ist, welcher die Kühlstrukturen trägt, daß sich der Kühlmantel in Richtung der Rotorachse mindestens über auf einer ersten Seite des Statorkörpers angeordnete Wickelköpfe der Statorwicklungen hinwegerstreckt und daß die Wickelköpfe durch Wärmeleitung mit körperlichem Kontakt thermisch mit dem Kühlmantel gekoppelt sind.

Der Vorteil der erfindungsgemäßen Lösung ist darin zu sehen, daß durch die Wärmeleitung mit körperlichem Kontakt zwischen den Wickelköpfen und dem Kühlmantel die Möglichkeit besteht, die in den Wickelköpfen entstehende Wärme auf den Kühlmantel abzuleiten, ohne daß diese Wärme über den Statorkörper geführt werden muß. Damit wird einerseits dem Statorkörper weniger Wärme zugeführt und andererseits wird die in den Wickelköpfen unmittelbar entstehende Wärme wesentlich effizienter abgeführt, so daß insgesamt eine deutliche Steigerung der Effizienz der Kühlung erreicht ist.

Im Rahmen der erfindungsgemäßen Lösung sind Lösungen denkbar, bei denen die Wickelköpfe abschnittsweise mit dem Kühlmantel thermisch über körperlichen Kontakt gekoppelt sind.

Die Wärmeabfuhr aus den Wickelköpfen läßt sich jedoch dadurch verbessern, daß die Wickelköpfe im wesentlichen in ihrer gesamten Ausdehnung über den Statorkörper hinaus mit dem Kühlmantel in thermischem Kontakt stehen.

Dies läßt sich beispielsweise dadurch erreichen, daß die Wickelköpfe mindestens auf einer Seite oder im Bereich zweier gegenüberliegender Seiten in mechanischer Berührung mit einem wärmeleitenden Element stehen.

Im Rahmen der erfindungsgemäßen Lösung sind unterschiedliche Arten der Wärmeleitung mit körperlichem Kontakt aus den Wickelköpfen denkbar.

Beispielsweise wäre es denkbar, die Wickelköpfe und den Kühlmantel durch an beiden mit körperlichem Kontakt anliegende Wärmeleitelemente, wie beispielsweise wärmeleitfähige Bügel oder Vorsprünge oder beispielsweise die Wickelköpfe einspannende Elemente zu erreichen.

Eine besonders günstige Lösung sieht vor, daß die Wickelköpfe durch eine wärmeleitfähige Masse mit dem Kühlmantel thermisch gekoppelt sind, da sich eine wärmeleitfähige Masse optimal an die Oberflächenkontur der Wickelköpfe anlegen läßt und somit einen optimalen körperlichen Kontakt mit den Wickelköpfen gewährleistet.

Die wärmeleitfähige Masse kann dabei eine ausgehärtete Masse oder eine noch elastische oder plastische Masse sein, die sich jedoch aufgrund ihrer Formbarkeit möglichst gut an die Oberfläche der Wickelköpfe anformen läßt.

Ein optimaler thermischer Kontakt zwischen der wärmeleitfähigen Masse und den Wickelköpfen läßt sich dann erreichen, wenn die wärmeleitfähige Masse eine Vergußmasse ist, das heißt, daß die Vergußmasse zunächst in einem fließfähigen Zustand aufbringbar ist, um einen körperlichen Kontakt mit dem Kühlmantel und den Wickelköpfen herzustellen und die Vergußmasse nach dem Verguß in einen ausgehärteten oder plastischen oder elastischen Zustand übergeht.

Darüber hinaus läßt sich die Wärmeleitung zwischen den Wickelköpfen und dem Kühlmantel noch zusätzlich dadurch optimieren, daß die Wickelköpfe in die wärmeleitfähige Masse eingebettet sind, das heißt im wesentlichen allseitig von der wärmeleitfähigen Masse im Einbettungsbereich umgeben sind.

Im Rahmen der bisherigen Lösung wurde lediglich davon ausgegangen, daß der Kühlmantel mit den auf einer ersten Seite des Stators angeordneten Wickelköpfen gekoppelt ist. Besonders günstig ist es dabei jedoch, wenn sich der Kühlmantel über die auf einer zweiten Seite des Statorkörpers angeordneten Wickelköpfe erstreckt und durch Wärmeleitung mit körperlichem Kontakt thermisch mit diesen Wickelköpfen gekoppelt ist.

Hinsichtlich der Ausbildung des Kühlmantels selbst wurden bislang keine näheren Angaben gemacht. So sieht ein vorteilhaftes Ausführungsbeispiel vor, daß die Kühlstrukturen Kühlrippen sind, mit welchen eine sehr effektive Wärmeübertragung von dem Kühlmantel auf das Kühlmedium möglich ist.

Hinsichtlich der Ausbildung der Kühlmedienführung sind verschiedene Varianten denkbar.

Eine besonders bevorzugte Lösung sieht vor, daß die Kühlmedienführung einen ersten Kühlmedienstrom und einen zweiten Kühlmedienstrom umfaßt, daß der zweite Kühlmedienstrom Wärme von dem Kühlmantel aufnimmt und daß der erste Kühlmedienstrom das Antriebsgehäuse gegenüber dem Kühlmantel thermisch abschirmt.

Prinzipiell kann dabei der erste Kühlmedienstrom und der zweite Kühlmedienstrom separat zu- und abgeführt werden. Eine besonders günstig Lösung sieht jedoch vor, daß der erste Kühlmedienstrom den zweiten Kühlmedienstrom mit Kühlmedium speist, so daß das Kühlmedium im zweiten Kühlmedienstrom aus dem ersten Kühlmedienstrom resultiert und somit keine separate Zufuhr von Kühlmedium zur Ausbildung des zweiten Kühlmedienstroms erforderlich ist.

Hinsichtlich der Führung des Kühlmediums in der Kühlmedienführung wurden bislang keine näheren Angaben gemacht. Beispielsweise wäre es denkbar, die Kühlmedien mäanderformig oder parallel zur Längsachse oder schräg zur Längsachse zu führen.

Konstruktiv hat es sich jedoch als besonders günstig erwiesen, wenn die mantelseitige Kühlmedienführung das Kühlmedium ungefähr parallel zu einer um die Rotorachse herum verlaufenden Umfangsrichtung des Stators führt, damit in einfacher Weise eine Zufuhr und Abfuhr des Kühlmediums mit möglichst wenig Störungen und Umlenkungen des Strömungsverlaufs des Kühlmediums möglich ist.

Um eine Wärmeabfuhr noch weiter zu optimieren, ist vorzugsweise vorgesehen, daß der Kühlmantel an mindestens einer ersten Stirnseite mit einem Kühlring versehen ist. Ein derartiger Kühlring schafft die weitere Möglichkeit, noch zusätzlich Wärme aus dem Kühlmantel abzuführen.

Noch besser ist es, wenn der Kühlmantel an einer zweiten Stirnseite mit einem Kühlring versehen ist.

Prinzipiell wäre es dabei denkbar, daß der Kühlring lediglich zur verbesserten Wärmeabfuhr aus dem Kühlmantel dient und somit selbst nicht mit den Wickelköpfen gekoppelt ist.

Besonders günstig ist es jedoch, wenn die Wickelköpfe durch Wärmeleitung mit körperlichen Kontakt thermisch mit dem Kühlring gekoppelt sind.

Eine derartige thermische Kopplung durch körperlichen Kontakt kann in gleicher Weise erfolgen, wie dies im Zusammenhang mit der Kopplung der Wickelköpfe mit dem Kühlmantel beschrieben wurde.

Besonders günstig ist es dabei, wenn der Kühlring über die wärmeleitfähige Masse thermisch mit den diesem zugewandten Wickelköpfen gekoppelt ist.

Besonders günstig läßt sich ein derartiger Kühlring dann einsetzen, wenn der Kühlring von Kühlmedium angeströmt ist.

Das den Kühlring anströmende Kühlmedium könnte prinzipiell separat zugeführt und in separaten Kreisläufen geführt werden.

Hinsichtlich einer möglichst einfachen konstruktiven Lösung ist es jedoch günstig, wenn das Kühlmedium über die mantelseitige Kühlmedienführung zugeführt wird, so daß keine separate Zufuhr für das die Kühlringe anströmende Kühlmedium erforderlich ist.

In besonders einfacher Weise läßt sich die Kühlung des Kühlrings dann erreichen, wenn das Kühlmedium zum Kühlen der Kühlringe ein Teilstrom eines der mantelseitigen Kühlmedienführung zugeführten Kühlmediumstroms ist.

Um eine besonders effiziente Wärmeübertragung von dem Kühlring auf das Kühlmedium zu erreichen, ist vorzugsweise vorgesehen, daß der Kühlring Kühlstrukturen aufweist, längs welchen das Kühlmedium strömt.

Vorzugsweise sind die Kühlstrukturen dabei als Kühlrippen ausgebildet.

Die Kühlrippen können dabei beispielsweise in Umfangsrichtung der Kühlringe verlaufen.

Eine effiziente Kühlung im Bereich der Kühlringe läßt sich so insbesondere dann erreichen, wenn die Kühlrippen im wesentlichen in radialer Richtung zur Rotorachse verlaufen.

Um das Kühlmedium optimal im Bereich der Kühlringe führen zu können, ist vorzugsweise vorgesehen, daß das Antriebsgehäuse eine stirnseitige Kühlmedienführung aufweist, welche das Kühlmedium über den Kühlring verteilt.

Dabei kann die stirnseitige Kühlmedienführung in unterschiedlichster Art und Weise ausgebildet sein.

Eine besonders einfache Lösung sieht vor, daß in die stirnseitige Kühlmedienführung Kühlmedium aus der mantelseitigen Kühlmedienführung eintritt und nach Kühlen des Kühlrings wieder zur mantelseitigen Kühlmedienführung hin austritt.

Diese Lösung hat den großen Vorteil, daß keine separate Zufuhr von Kühlmedium erforderlich ist, sondern die Versorgung und Entsorgung der stirnseitigen Kühlmedienführung über die mantelseitige Kühlmedienführung erfolgen kann.

Um das Kühlmedium möglichst günstig auf dem Kühlring verteilen zu können, ist vorzugsweise vorgesehen, daß die stirnseitige Kühlmedienführung einen azimutal um die Rotorachse herum verlaufenden Verteilkanal aufweist, so daß sich das Kühlmedium optimal über den gesamten Kühlring verteilen läßt.

Ferner ist zweckmäßigerweise vorgesehen, daß die stirnseitige Kühlmedienführung einen radial zur Rotorachse gegenüber dem Verteilkanal nach innen gesetzten Sammelkanal aufweist, über welchen sich das Kühlmedium abführen läßt.

Besonders zweckmäßig ist es, wenn die Kühlmedienführung eine im wesentlichen radial verlaufende Strömung des Kühlmediums zwischen dem Verteilkanal und dem Sammelkanal vorsieht.

Hinsichtlich der Realisierung der stirnseitigen Kühlmedienführung wurden bislang keine näheren Angaben gemacht. So wäre es beispielsweise denkbar, ein eigenes Kühlmedienführungselement vorzusehen.

Eine besonders günstige Lösung sieht jedoch vor, daß die stirnseitige Kühlmedienführung zumindest teilweise durch einen erste Lagerflansch des Antriebsgehäuses gebildet ist.

Ferner ist zweckmäßigerweise vorgesehen, daß die stirnseitige Kühlmedienführung zumindest teilweise durch einen zweiten Lagerflansch des Antriebsgehäuses gebildet ist, so daß sich die Führung des Kühlmediums bereits durch die ohnehin vorhandenen Lagerflansche des Antriebsgehäuses realisieren läßt.

Hinsichtlich der Fixierung des Stators bei dem erfindungsgemäßen Antrieb wurden bislang keine näheren Angaben gemacht. So sieht ein vorteilhaftes Ausführungsbeispiel vor, daß der Kühlmantel den Stator gegenüber dem Antriebsgehäuse abstützt. Damit ist der Stator nur über den Kühlmantel im Antriebsgehäuse gehalten und gibt somit auch seine Wärme nur an den Kühlmantel ab, von welchem dann mit dem Kühlmedium die Wärme abgeführt wird.

Vorzugsweise ist dabei der Kühlmantel mit Tragringen versehen, mit welchen sich dieser am Antriebsgehäuse abstützt.

Die Fixierung des Stators in dem Kühlmantel ist in unterschiedlichster Weise denkbar. Beispielsweise könnte der Stator, insbesondere der Statorkörper durch Schrauben mit dem Kühlmantel verbunden sein.

Eine besonders günstige Lösung sieht jedoch vor, daß der Stator mit Preßsitz in den Kühlmantel eingesetzt ist und somit ein optimaler Wärmeübergang von dem Stator, insbesondere dem Statorkörper auf den Kühlmantel gewährleistet ist.

Hinsichtlich der vorgesehenen Kühlstrukturen ist es zweckmäßig, wenn der Kühlmantel im wesentlichen über seine ganze Erstreckung in Richtung der Rotorachse mit Kühlstrukturen versehen ist.

Weitere Merkmale und Vorteile der Erfindung sind Gegenstand der nachfolgenden Beschreibung sowie der zeichnerischen Darstellung eines Ausführungsbeispiels. In der Zeichnung zeigen:
- Figur 1: einen Längsschnitt durch einen erfindungsgemäßen Antrieb;
- Figur 2: eine perspektivische Ansicht von Stator, Kühlmantel und einem Kühlring mit außen weg gebrochenem in Richtung des Pfeils A in Figur 1 mit außen in einer weiter zurückliegenden Ebene geschnittenem Antriebsgehäuse;
- Figur 3: eine Ansicht ähnlich Figur 2 jedoch in Richtung des Pfeils B in Figur 1;
- Figur 4: einen Schnitt durch das Antriebsgehäuse im Bereich eines vorderen Lagerflanschs ähnlich Figur 1, jedoch mit perspektivisch dargestelltem Kühlmantel und Kühlring;
- Figur 5: einen ungefähr halbseitigen Schnitt längs Linie 5-5 in Figur 1;
- Figur 6: eine Draufsicht auf einen vorderen Lagerflansch ohne Rotor in einer Schnittebene längs Linie 6-6 in Figur 1 und
- Figur 7: eine Draufsicht auf einen hinteren Lagerflansch in einer Schnittebene längs Linie 7-7 in Figur 1.

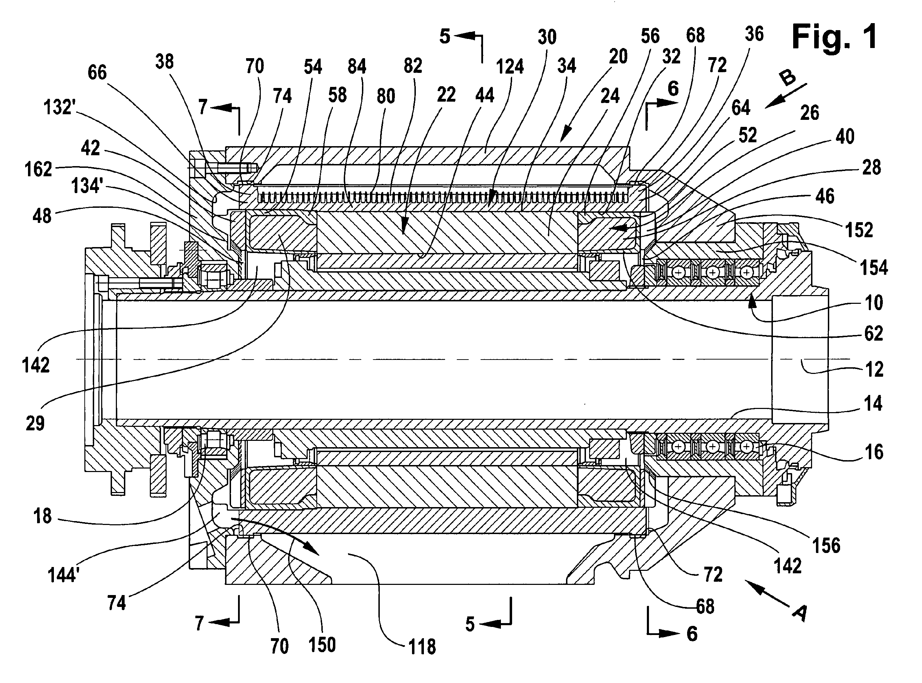

Ein Ausführungsbeispiel eines erfindungsgemäßen Antriebs für Werkzeugmaschinen, dargestellt in Figur 1, umfaßt einen als Ganzes mit 10 bezeichneten Rotor, welcher um eine Rotorachse 12 drehbar ist.

Der Rotor 10 ist dabei vorzugsweise als Hohlwelle mit einem zentralen Durchbruch 14 ausgebildet, so daß in den zentralen Durchbruch 14 eine Betätigung für eine Spannzange oder ein Spannfutter einsetzbar ist und gegebenenfalls durch den zentralen Durchbruch 14 ein Werkstück hindurchführbar ist.

Der Rotor 10 ist seinerseits über Lageranordnungen 16 und 18 in einem als Ganzes mit 20 bezeichneten Antriebsgehäuse gelagert, welches von einem zeichnerisch nicht dargestellten Maschinengestell der Werkzeugmaschine getragen ist, entweder dadurch, daß das Antriebsgehäuse 20 direkt auf dem Maschinengestell montiert ist oder beispielsweise im Fall eines Antriebs für eine Werkzeug- oder Werkstückspindel auf einem Spindelträger gelagert ist, der seinerseits entweder stationär zum Maschinengestell angeordnet werden kann oder der gegenüber dem Maschinengestell bewegbar ist, wobei der Spindelträger ein Schlitten oder auch eine Spindeltrommel sein kann.

In dem Gehäuse 20 ist ein als Ganzes mit 22 bezeichneter Stator des erfindungsgemäßen Antriebs aufgenommen, der einen als Ganzes mit 24 bezeichneten, ein Blechpaket umfassenden Statorkörper aufweist, welcher von Statorwicklungen 26 durchsetzt ist, wobei diese Statorwicklungen 26 in Richtung der Rotorachse 12 auf einer ersten Seite des Statorkörpers 24 und auf einer zweiten Seite des Statorkörpers 24 über diesen überstehende erste bzw. zweite Wickelköpfe 28, 29 aufweisen.

Der Stator 22 ist seinerseits von einem als Ganzes mit 30 bezeichneten Kühlmantel umgeben, der sich in Richtung parallel zur Rotorachse 12 sowohl über den Statorkörper 24 als auch über die über den Statorkörper 24 überstehenden Wickelköpfe 28, 29 der Statorwicklungen 26 erstreckt.

Der Kühlmantel 30 ist durch Aufschrumpfen auf dem Stator 24 fixiert und weist dabei eine Innenfläche 32 auf, an welcher der aufgeschrumpfte Statorkörper 24 mit einer Außenfläche 34 anliegt, während sich die Wickelköpfe 28, 29 im Abstand von der Innenfläche 32 des Kühlmantels erstrecken.

Ferner ist der Kühlmantel 30 mit an seinen Endbereichen 36, 38 in diese teilweise eingreifenden und dabei an der Innenfläche 32 anliegenden Kühlringen 40 und 42 versehen, die sich ausgehend von der Innenfläche 32 des Kühlmantels 30 radial zur Rotorachse 12 nach innen, das heißt zu dieser hin, erstrecken und dabei radial maximal so weit verlaufen, wie die Wickelköpfe 28, 29, und auch maximal bis zu Polflächen 44 des Statorkörpers 24, so daß die Kühlringe 40 und 42 radial innenliegende Öffnungen 46 und 48 aufweisen, durch welche der Rotor 10 hindurchgreift.

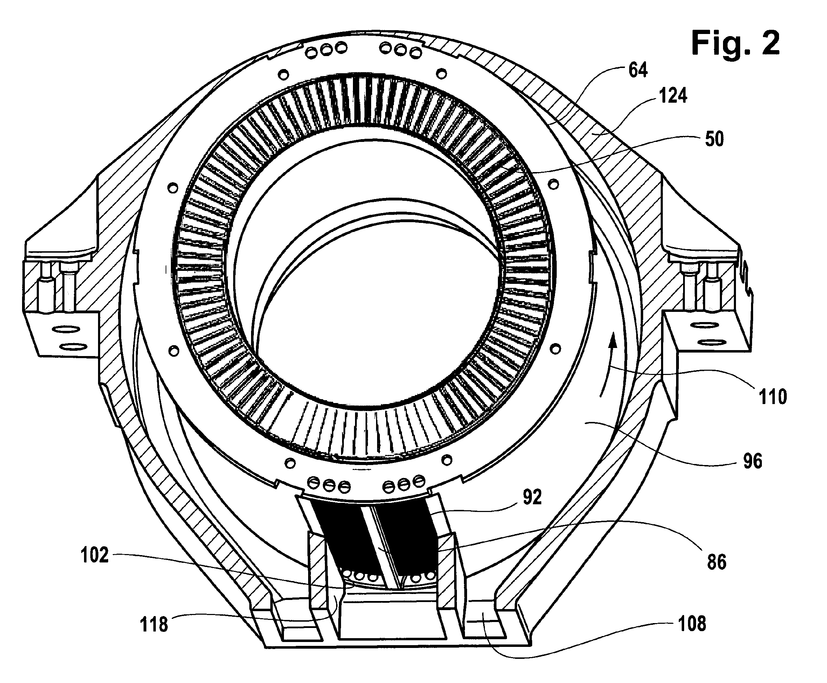

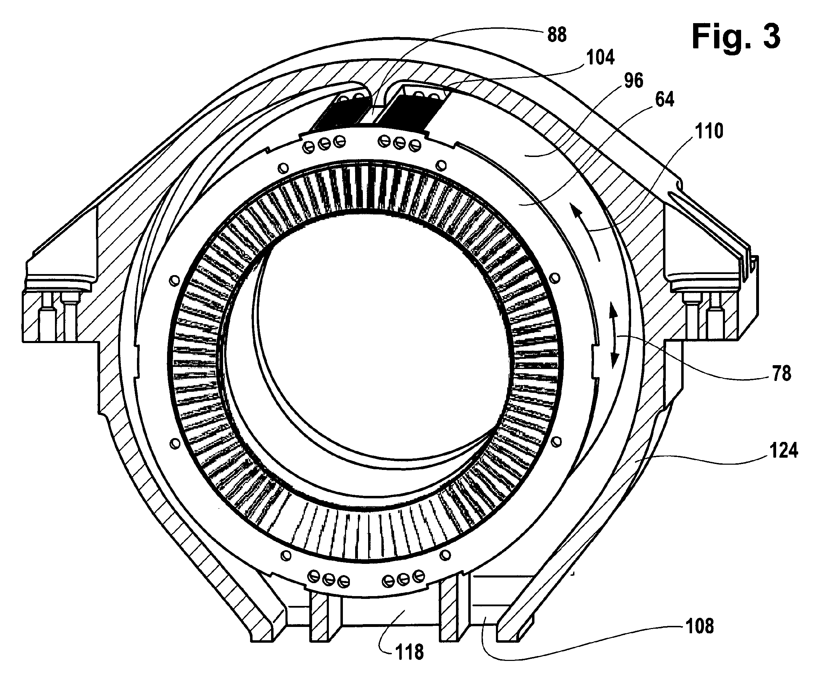

Wie in Figur 2 bis 4 dargestellt, umfaßt jeder der Kühlringe 40, 42 ungefähr radial zur Rotorachse verlaufende Kühlrippen 50.

Ferner sind die Kühlringe 40, 42 in Richtung parallel zur Rotorachse 12 in einem derartigen Abstand von dem Statorkörper 24 angeordnet, daß sich die Wickelköpfe 28, 29 in einem sich zwischen dem Statorkörper 24 und den Kühlringen 40, 42 liegenden Raum 52, 54 erstrecken können, ohne direkten Kontakt mit den Kühlringen 40, 42 zu haben.

Zweckmäßigerweise ist der Raum 52, 54 mit einer wärmeleitenden Masse 56, 58 ausgefüllt, die die Wickelköpfe 28, 29 einbettet und dabei die Wickelköpfe 28, 29 thermisch sowohl an die die Räume 52, 54 übergreifende Bereiche des Kühlmantels 30 als auch an die Kühlringe 40, 42 ankoppelt, so daß die gesamte in den Wickelköpfen 28, 29 entstehende Wärme durch körperliche Wärmeleitung über die wärmeleitende Masse 56, 58 zum Teil zum Kühlmantel 30 und zum Teil zu den Kühlringen 40, 42 abgeführt wird.

Die wärmeleitende Masse 56, 58 füllt dabei den gesamten Raum 52, 54 aus und erstreckt sich vorzugsweise in radialer Richtung bis maximal zu den Polflächen 44 des Statorkörpers 24. Insbesondere kann dabei die wärmeleitende Masse 56, 58 die Wickelköpfe 28, 29 auch auf ihren dem Rotor 10 zugewandten Seiten überdecken und somit zu einer vollständig die Wickelköpfe 28, 29 umschließenden Einbettung derselben in der wärmeleitenden Masse 56, 58 führen.

Die wärmeleitende Masse 56, 58 ist vorzugsweise eine Vergußmasse auf Kunstharzbasis mit einem gut wärmeleitenden Füllmaterial und wird unter Zuhilfenahme einer Gußform eingesetzt, um die Wickelköpfe 28, 29 einzubetten und die Räume 52, 54 auszufüllen.

Der Kühlmantel ist an seinen Endbereichen 36, 38 mit um die Rotorachse 12 umlaufenden Tragringen 64, 66 versehen, mit welchen der Kühlmantel 30 an dem Antriebsgehäuse 20 abgestützt ist, wobei vorzugsweise die Tragringe 64, 66 in radialer Richtung zur Rotorachse 12 außenliegende Tragflächen 68, 70 aufweisen, die an im Antriebsgehäuse 20 vorgesehenen Stützflächen 72, 74 anliegen und somit den Kühlmantel 30 mitsamt dem Stator 22 zentriert zur Rotorachse 12 fixieren.

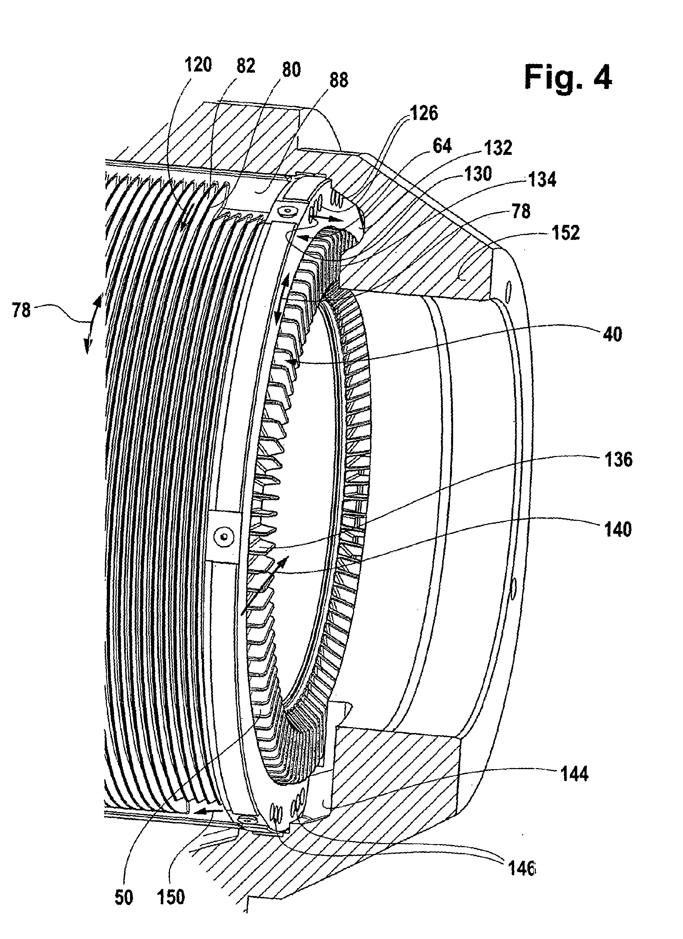

Wie in den Figuren 1 und 4 erkennbar, umfaßt der Kühlmantel 30 im Bereich seiner gesamten Erstreckung zwischen den Tragringen 64 und 66 eine Vielzahl von sich in einer Umfangsrichtung 78 zur Rotorachse 12 erstreckenden Kühlrippen 80, zwischen denen Zwischenräume 82 verbleiben.

Die Kühlrippen 80 erheben sich dabei über einer die Innenfläche 32 bildenden Wand 84 des Kühlmantels 30, und zwar auf einer der Rotorachse 12 abgewandten Seite der Wand 84 und enden in Umfangsrichtung 78 jeweils an einem unteren Längssteg 86 sowie einem oberen Längssteg 88, die beide parallel zur Rotorachse 12 verlaufen und die Zwischenräume 82 verschließen.

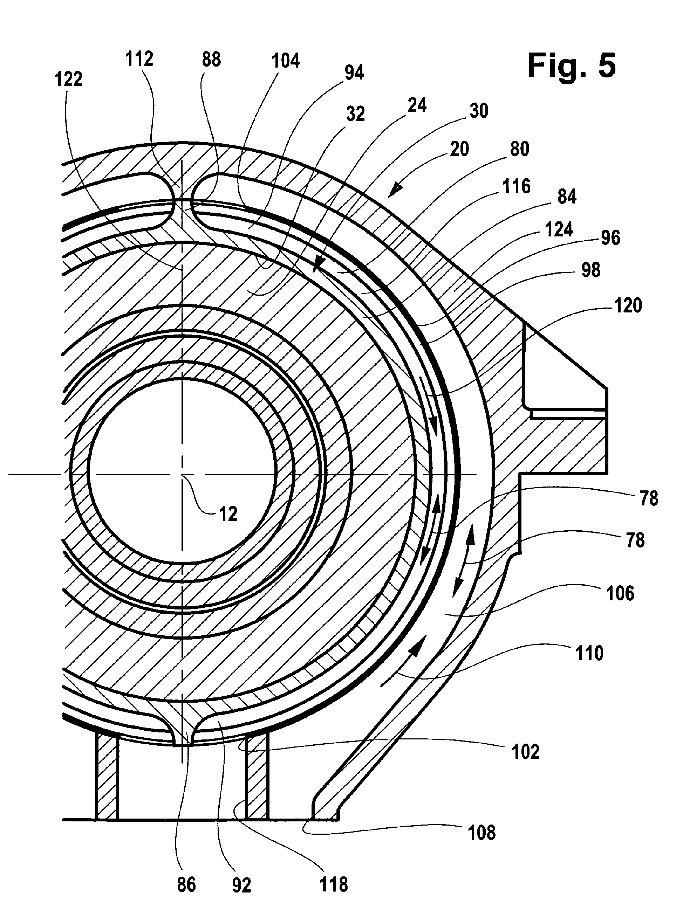

Wie insbesondere in Figur 2, 3 und 5 dargestellt, sind die Kühlrippen 80 bis auf einen Ausströmbereich 92 und einen Einströmbereich 94 derselben überdeckt von einer Trennwand 96, welche im Abstand von den Kühlrippen 80 verläuft, so daß zwischen dieser und den Kühlrippen 80 und der Trennwand 96 ein Freiraum 98 verbleibt.

Die Trennwand 96 ist ihrerseits mit einer über dem Ausströmbereich 92 liegenden Ausströmöffnung 102 und einer über dem Einströmbereich 94 liegenden Einströmöffnung 104 versehen.

Ferner weist das Antriebsgehäuse 20 in einem den Kühlmantel 30 umgebenden Bereich einen dem Kühlmantel 30 zugewandten und sich in Richtung der Rotorachse 12 im wesentlichen über die gesamte Länge des Kühlmantels 30 erstreckenden ersten Kühlkanal 106 auf, welcher von einer unteren nahe der Ausströmöffnung 102 liegenden Eintrittsöffnung 108 einen ersten Kühlluftstrom 110 auf einer dem Freiraum 98 abgewandten Seite der Trennwand 96 über ungefähr einen halben Umfang des Kühlmantels 30 führt, und zwar bis zu einem ebenfalls in dem Antriebsgehäuse 20 vorgesehenen Umlenksteg 112, welcher dem oberen Längssteg 88 zugewandt angeordnet ist und auf diesem aufliegt.

Der Umlenksteg 112 führt somit zu einer Umlenkung des ersten Kühlluftstroms 110 derart, daß dieser in die Einströmöffnung 104 eintritt und ausgehend von der Einströmöffnung 104 in der Azimutal- oder Umfangsrichtung 78 in einem zweiten Kühlkanal 116, gebildet zwischen der Wand 84 und der Trennwand 96 in Form eines zweiten Kühlluftstroms 120 über ungefähr einen halben Umfang des Kühlmantels 30 entgegengesetzt zur Strömungsrichtung des ersten Kühlluftstroms 110 in Richtung des unteren Längsstegs 86 strömt, wobei der zweite Kühlluftstrom 120 sich entweder in den Zwischenräumen 82 zwischen den Kühlrippen 80 oder dem Freiraum 98 zwischen den Kühlrippen 80 und der Trennwand 96 ausbreiten kann und durch diese geführt ist. Der zweite Kühlluftstrom 120 tritt durch die Ausströmöffnung 102 aus und wird von einer unteren Austrittsöffnung 118 des Antriebsgehäuses 20 aufgenommen, wobei insbesondere der untere Längssteg 86 dazu beiträgt, den zweiten Kühlluftstrom 120 aus der Umfangs- oder Azimutalrichtung 78 heraus in Richtung der unteren Ausströmöffnung 118 umzulenken.

Somit ist bei dem erfindungsgemäßen Antrieb beiderseits einer Mittelebene 122 zunächst der erste Kühlluftstrom 110 im Antriebsgehäuse 20, und zwar zwischen einer Außenwand 124 desselben und der Trennwand 96 geführt und nimmt von der Trennwand 96 und gegebenenfalls auch von der Außenwand 124 des Antriebsgehäuses 20 Wärme auf, so daß insgesamt das Antriebsgehäuse 20 thermisch von dem sich erwärmenden Stator 22und dem Kühlmantel 30 abgeschirmt ist.

Dieser geringfügig vorgewärmte Kühlluftstrom 110 tritt nun über die Einströmöffnung 104 in den zweiten Kühlkanal 116 ein und nimmt dabei Wärme sowohl von den Kühlrippen 80 als auch der Wand 84 auf, wobei der zweiten Kühlluftstrom 120 dann diese Wärme über die untere Austrittsöffnung 118 abführt.

Damit wird zum einen das Antriebsgehäuse 20 selbst zunächst vom kalten ersten Kühlluftstrom 110 angeströmt und somit von diesem auf der gewünschten Temperatur gehalten, so daß thermische Ausdehnungen weitgehend vermieden werden. Danach nimmt die Kühlluft im zweiten Kühlluftstrom 120 die Wärme direkt vom Kühlmantel 30 über die Kühlrippen 80 und die Wand 84 auf und führt diese direkt über die untere Austrittsöffnung 118 aus dem Antriebsgehäuse 20 ab, wobei das Antriebsgehäuse 20 dabei eine möglichst geringe Erwärmung erfährt, um Ungenauigkeiten bei der Ausrichtung und Lagerung des Rotors 10 möglichst weitgehend zu vermeiden.

Bei dieser Abfuhr von Wärme wird nicht nur Wärme aus dem in direktem Kontakt mit dem Kühlmantel 30 stehenden Statorkörper 24 aufgenommen, sondern auch Wärme, die aus den Wickelköpfen 28 über die wärmeleitende Masse 56, 58 dem Kühlmantel 30 in einem nahe von dessen Endbereichen 36, 38 Bereich zugeführt wird.

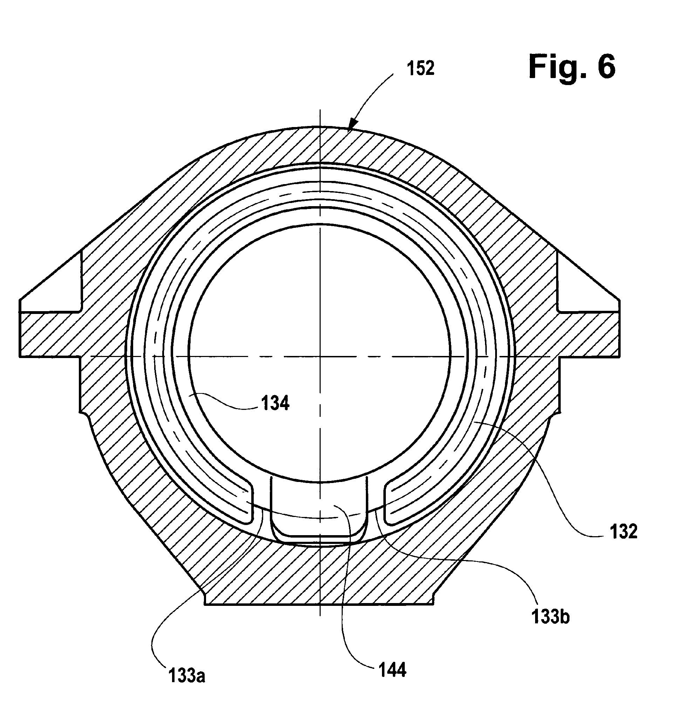

Um nun auch beispielsweise im Bereich des Kühlrings 40 mit der zugeführten Kühlluft kühlen zu können, ist der Tragring 64 mit Durchbrüchen 126 versehen, die nahe des oberen Längsstegs 88 liegen und von dem zweiten Kühlluftstrom 120 einen Teilstrom 130 abzweigen, welcher in einen Verteilkanal 132 eintritt, der ebenfalls im wesentlichen in Azimutal- oder Umfangsrichtung 78, jedoch nicht geschlossen, um die Rotorachse 12 umläuft und die Kühlluft den radial zur Rotorachse 12 verlaufenden Kühlrippen 50 des Kühlrings 40 zuführt. Der Verteilkanal 132 ist in Umfangsrichtung 78 begrenzt durch Abschlußwände 133a, b (Figur 6).

Der Verteilkanal 132 wird jedoch in radialer Richtung zur Rotorachse 12 hin begrenzt durch eine bis an die Kühlrippen 50 heranreichende Leitwand 134, so daß der in den Verteilkanal 132 eintretende Teilstrom 130 gezwungen wird, durch sich zwischen den Kühlrippen 50 bildende Teilkühlkanäle 136 in Form von Teilkühlluftströmen 140 hindurchzutreten.

Die Teilkühlluftströme 140 werden dann, wie in Figur 1 dargestellt, in einem Sammelkanal 142 im wesentlichen über fast den gesamten Bereich um den Rotor 10 herum gesammelt und zu einem in der Leitwand 134 und zwischen den Abschlußwänden 133a, b vorgesehenen Auslaßausschnitt 144 geführt, der seinerseits wieder an Durchbrüche 146 heranreicht, die ebenfalls den Tragring 64 durchsetzen und die Möglichkeit eröffnen, daß wiederum ein Teilstrom 150 im Bereich der unteren Ausströmöffnung 102 sich mit dem zweiten Kühlluftstrom 120 vereinigt und über die untere Austrittsöffnung 118 abströmt (Figuren 1, 6).

Die erfindungsgemäße Lösung schafft somit auch die Möglichkeit, über den Teilstrom 130 auch den Kühlring 40 effektiv zu kühlen und somit die von der wärmeleitfähigen Masse 56 aus dem Wickelkopf 28 in den Kühlring 40 eingekoppelte Wärme aus diesem abzuführen bei möglichst geringer thermischer Beeinflussung des Antriebsgehäuses 20.

Um das Abzweigen des Teilstroms 130 nahe des Tragrings 64 zu erleichtern, sind im Bereich des Tragrings 64 und der Durchbrüche 126 die Kühlrippen 80 in ihrer Erhebung über der Wand 84 reduziert, so daß sich in einfacher Weise ein Teil des sich gerade ausbildenden zweiten Kühlluftstroms 120 in Richtung der Rotorachse 12 ausbreiten und durch die Durchbrüche 126 hindurchströmen kann.

In gleicher Weise führt die Reduzierung der Höhe der Kühlrippen 80 im Bereich der Durchbrüche 146 ebenfalls zu einem erleichterten Eintreten des Teilstroms 150 in den die Kühlrippen 80 aufweisenden Bereich, so daß dieser Teilstrom 150 nach seiner Vereinigung mit dem aus der unteren Ausströmöffnung 102 austretenden zweiten Kühlluftstrom 120 über die untere Austrittsöffnung 118 aus dem Antriebsgehäuse 20 austreten kann.

Bei dem dargestellten Ausführungsbeispiel sind der Verteilkanal 132 und die Leitwand 134 in einem vorderen Lagerflansch 152 ausgebildet, der eine Aufnahme 154 für die Lageranordnung 16 trägt. Die Aufnahme 154 ist beispielsweise als Büchse ausgebildet, welche zusätzlich noch mit einer in dem Antriebsgehäuse 20 liegenden Stirnseite 156 die Leitwand 134 ergänzt, um die Teilkühlluftströme 140 in den Sammelkanal 142 einzuleiten.

Der vordere Lagerflansch 152 kann nun als mit der Außenwand 124 des Antriebsgehäuses 20 verbindbares Teil ausgebildet sein, bei dem dargestellten Ausführungsbeispiel ist jedoch der vordere Lagerflansch 152 einstückig an die Außenwand 124 des Antriebsgehäuses 20 angeformt.

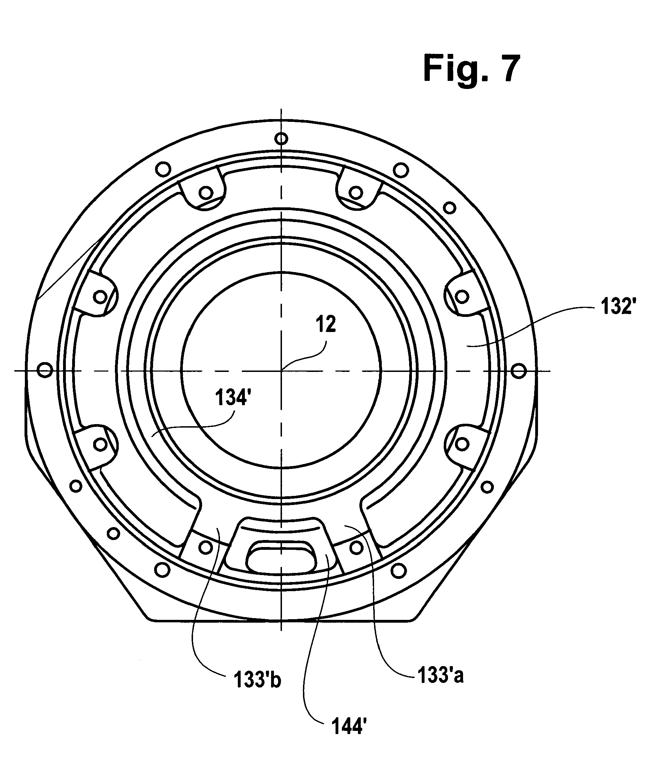

Ferner ist bei dem dargestellten Ausführungsbeispiel ein hinterer Lagerflansch 162 lösbar mit der Außenwand 124 verbunden, in welchen ebenfalls in gleicher Weise wie beim vorderen Lagerflansch 152 ein Verteilkanal 132' eingeformt ist, der mit einer Leitwand 134' zusammenwirkt, um ebenfalls Teilkühlluftströme 140 durch die Kühlrippen 50 des Kühlrings 42 hindurchtreten zu lassen, wobei wiederum ein Sammeln der Kühlluft in dem Sammelkanal 142 erfolgt, von welchem ausgehend dann über den Auslaßausschnitt 144' wiederum der Teilstrom 150 durch den Tragring 66 hindurchtreten kann, um sich mit dem zweiten Kühlluftstrom 120 in der beschrieben Weise zu vereinigen und durch die Austrittsöffnung 118 aus dem Antriebsgehäuse 20 auszutreten (Figuren 1 und 7).

## Patentansprüche

1. Antrieb für Werkzeugmaschinen umfassend einen um eine Rotorachse (12) drehbaren Rotor (10), einen Stator (22) mit einem Statorkörper (24) und diesen durchsetzende Statorwicklungen (26) und ein den Stator (22) aufnehmendes Antriebsgehäuse (20) mit einer mantelseitigen Kühlmedienführung (106, 116), welche gasförmiges Kühlmedium entlang von mit dem Stator (22) thermisch gekoppelten Kühlstrukturen (80) führt,
**dadurch gekennzeichnet , daß** der Statorkörper (24) von einem Kühlmantel (30) umschlossen ist, welcher die Kühlstrukturen (80) trägt, daß sich der Kühlmantel (30) in Richtung der Rotorachse (12) mindestens über auf einer ersten Seite des Statorkörpers (24) angeordnete Wickelköpfe (28, 29) der Statorwicklungen (26) hinwegerstreckt und daß die Wickelköpfe (28, 29) durch Wärmeleitung mit körperlichem Kontakt thermisch mit dem Kühlmantel (30) gekoppelt sind.

2. Antrieb nach Anspruch 1, **dadurch gekennzeichnet, daß** die Wickelköpfe (28, 29) im wesentlichen in ihrer gesamten Ausdehnung über den Statorkörper (24) hinaus mit dem Kühlmantel (30) in thermischem Kontakt stehen.

3. Antrieb nach Anspruch 1 oder 2, **dadurch gekennzeichnet, daß** die Wickelköpfe (28, 29) durch eine wärmeleitfähige Masse (56, 58) mit dem Kühlmantel (30) thermisch gekoppelt sind.

4. Antrieb nach Anspruch 3, **dadurch gekennzeichnet, daß** die wärmeleitfähige Masse (56, 58) eine Vergußmasse ist.

5. Antrieb nach einem der Ansprüche 2 bis 4, **dadurch gekennzeichnet, daß** die Wickelköpfe (28, 29) in die wärmeleitfähige Masse (56, 58) eingebettet sind.

6. Antrieb nach einem der voranstehenden Ansprüche, **dadurch gekennzeichnet, daß** sich der Kühlmantel (30) über die auf einer zweiten Seite des Statorkörpers (24) angeordneten Wickelköpfe (29, 28) erstreckt und durch Wärmeleitung mit körperlichem Kontakt thermisch mit diesen Wickelköpfen (29, 28) gekoppelt ist.

7. Antrieb nach einem der voranstehenden Ansprüche, **dadurch gekennzeichnet, daß** die Kühlstrukturen Kühlrippen (80) sind.

8. Antrieb nach einem der voranstehenden Ansprüche, **dadurch gekennzeichnet, daß** die Kühlmedienführung (106, 116) einen ersten Kühlmedienstrom (110) und einen zweiten Kühlmedienstrom (120) umfaßt, daß der zweite Kühlmedienstrom (120) Wärme von dem Kühlmantel (30) aufnimmt und daß der erste Kühlmedienstrom (110) das Antriebsgehäuse (20) gegenüber dem Kühlmantel (30) thermisch abschirmt.

9. Antrieb nach Anspruch 8, **dadurch gekennzeichnet, daß** der erste Kühlmedienstrom (110) den zweiten Kühlmedienstrom (120) speist.

10. Antrieb nach einem der voranstehenden Ansprüche, **dadurch gekennzeichnet, daß** die mantelseitige Kühlmedienführung (106, 116) das Kühlmedium ungefähr parallel zu einer um die Rotorachse (12) herum verlaufenden Umfangsrichtung (78) des Stators (22) führt.

11. Antrieb nach einem der voranstehenden Ansprüche, **dadurch gekennzeichnet, daß** der Kühlmantel (30) an mindestens einer ersten Stirnseite (36) mit einem ersten Kühlring (40) versehen ist.

12. Antrieb nach einem der voranstehenden Ansprüche, **dadurch gekennzeichnet, daß** der Kühlmantel (30) an einer zweiten Stirnseite (38) mit einem zweiten Kühlring (42) versehen ist.

13. Antrieb nach Anspruch 11 oder 12, **dadurch gekennzeichnet, daß** die Wickelköpfe (28, 29) durch Wärmeleitung mit körperlichem Kontakt thermisch mit dem Kühlring (40, 42) gekoppelt sind.

14. Antrieb nach einem der Ansprüche 11 bis 13, **dadurch gekennzeichnet, daß** der Kühlring über die wärmeleitfähige Masse (56, 58) thermisch mit den diesem zugewandten Wickelköpfen (28, 29) gekoppelt ist.

15. Antrieb nach einem der Ansprüche 11 bis 14, **dadurch gekennzeichnet, daß** der Kühlring (40, 42) von Kühlmedium angeströmt ist.

16. Antrieb nach Anspruch 15, **dadurch gekennzeichnet, daß** das Kühlmedium über die mantelseitige Kühlmedienführung (106, 116) zugeführt ist.

17. Antrieb nach Anspruch 15 oder 16, **dadurch gekennzeichnet, daß** das Kühlmedium zum Kühlen der Kühlringe (40, 42) einen Teilstrom (130) eines der mantelseitigen Kühlmedienführung (106, 116) zugeführten Kühlmedienstroms (110) bildet.

18. Antrieb nach einem der Ansprüche 11 bis 17, **dadurch gekennzeichnet, daß** der Kühlring (40, 42) Kühlstrukturen (50) aufweist, längs welchen das Kühlmedium strömt.

19. Antrieb nach Anspruch 18, **dadurch gekennzeichnet, daß** die Kühlstrukturen Kühlrippen (50) sind.

20. Antrieb nach Anspruch 19, **dadurch gekennzeichnet, daß** die Kühlrippen (50) im wesentlichen in radialer Richtung zur Rotorachse (12) verlaufen.

21. Antrieb nach einem der Ansprüche 11 bis 20, **dadurch gekennzeichnet, daß** das Antriebsgehäuse (20) eine stirnseitige Luftführung (132, 142) aufweist, welche das Kühlmedium über den Kühlring (40, 42) verteilt.

22. Antrieb nach Anspruch 21, **dadurch gekennzeichnet, daß** in die stirnseitige Kühlmedienführung (132, 142) Kühlmedium aus der mantelseitigen Kühlmedienführung (106, 116) eintritt und nach Kühlen des Kühlrings (40, 42) wieder zur mantelseitigen Kühlmedienführung (106, 116) hin austritt.

23. Antrieb nach Anspruch 21 oder 22, **dadurch gekennzeichnet, daß** die stirnseitige Kühlmedienführung (132, 142) einen azimutal um die Rotorachse (12) herum verlaufenden Verteilkanal (132) aufweist.

24. Antrieb nach einem der Ansprüche 21 bis 23, **dadurch gekennzeichnet, daß** die stirnseitige Kühlmedienführung (132, 142) einen radial zur Rotorachse (12) gegenüber dem Verteilkanal (132) nach innen gesetzten Sammelkanal (142) aufweist.

25. Antrieb nach einem der Ansprüche 21 bis 24, **dadurch gekennzeichnet, daß** die stirnseitige Kühlmedienführung (132, 142) eine im wesentlichen radiale Strömung des Kühlmediums von dem Verteilkanal (132) zu dem Sammelkanal (142) vorsieht.

26. Antrieb nach einem der Ansprüche 21 bis 25, **dadurch gekennzeichnet, daß** die stirnseitige Kühlmedienführung (132, 142) teilweise durch einen ersten Lagerflansch (152) des Antriebsgehäuses (20) gebildet ist.

27. Antrieb nach einem der Ansprüche 21 bis 26, **dadurch gekennzeichnet, daß** die stirnseitige Kühlmedienführung (132, 142) zumindest teilweise durch einen zweiten Lagerflansch (162) des Antriebsgehäuses (20) gebildet ist.

28. Antrieb nach einem der voranstehenden Ansprüche, **dadurch gekennzeichnet, daß** der Kühlmantel (30) den Stator (22) gegenüber dem Antriebsgehäuse (20) abstützt.

29. Antrieb nach Anspruch 28, **dadurch gekennzeichnet, daß** der Kühlmantel (30) mit Tragringen (64, 66) versehen ist, mit welchen sich dieser in dem Antriebsgehäuse (20) abstützt.

30. Antrieb nach einem der voranstehenden Ansprüche, **dadurch gekennzeichnet, daß** der Stator (22) mit Preßsitz in den Kühlmantel (30) eingesetzt ist.
